Europäisches Patentamt

(19) European Patent Office

Office européen des brevets

(11) Numéro de publication : **0 148 794**
**B1**

(12) **FASCICULE DE BREVET EUROPÉEN**

(45) Date de publication du fascicule du brevet :
26.04.89

(21) Numéro de dépôt : 85400006.4

(22) Date de dépôt : 04.01.85

(51) Int. Cl.⁴ : **F 16 D   1/12, B 62 D   1/10**

(54) **Dispositif pour régler la position angulaire d'un élément menant, accouplé à un autre élément mené susceptibles d'être entraînés en rotation.**

(30) Priorité : 06.01.84 FR 8400170

(43) Date de publication de la demande :
17.07.85 Bulletin 85/29

(45) Mention de la délivrance du brevet :
26.04.89 Bulletin 89/17

(84) Etats contractants désignés :
**DE FR GB IT**

(56) Documents cités :
**DE–C–   900 505**
**FR–A–   927 305**
**FR–A–   997 670**
**GB–A–   485 304**
**GB–A–   509 508**
**NL–C–    47 716**
**US–A– 1 922 596**

(73) Titulaire : **Eckendorff, Jean-Pierre**
**La Ferme St-Pierre La Neuville Claville**
**F-27930 Evreux (FR)**

(72) Inventeur : **Eckendorff, Jean-Pierre**
**La Ferme St-Pierre La Neuville Claville**
**F-27930 Evreux (FR)**

(74) Mandataire : **CABINET BONNET-THIRION**
**95 Boulevard Beaumarchais**
**F-75003 Paris (FR)**

Jouve, 18, rue St-Denis, 75001 Paris, France

EP 0 148 794 B1

## Description

La présente invention concerne un dispositif pour régler la position angulaire d'un élément calé en rotation avec un autre élément, par exemple un volant de véhicule automobile assemblé à une colonne de direction.

A ce jour, on connaît des dispositifs comprenant deux arbres accouplés, dans lesquels la position angulaire d'un arbre peut être modifiée par rapport à l'autre.

Il en est ainsi dans le brevet GB-A-509 508 (Elliot) où l'on trouve en combinaison les caractéristiques énoncées dans la partie introductive de la revendication 1. Une bague interposée entre élément menant et mené y est constitué par deux blocs disposés de part et d'autre d'un ressort destiné à assurer par effet de coincement l'accouplement entre un arbre menant et un arbre mené.

Pour modifier la position angulaire de l'arbre mené, on actionne en translation un organe associé aux blocs, de sorte à annihiler l'effet de coincement, et permettre le décalage angulaire de l'arbre mené.

On observe qu'une telle disposition est plus particulièrement destinée à permettre le réglage en fonctionnement d'une magnéto.

Les dispositions de ce genre offrent la possibilité de modifier la position angulaire d'un élément accouplé à un autre, de manière « flottante ».

On conçoit que de tels assemblages « flottants » ne sont pas soumis à des contraintes importantes, et que de plus, les risques d'accident en cas de déréglage, ou détérioration, sont limités.

S'agissant de la possibilité de régler la position angulaire d'un volant sur une colonne de direction, on conçoit aisément que l'assemblage des éléments en cause ne peut être flottant, mais doit au contraire être doté de caractéristiques mécaniques capables de répondre, en toute sécurité, à des sollicitations et contraintes permanentes.

De manière bien connue, les volants pour véhicules automobiles comportent un cercle et un moyeu, réunis de manière courante par plusieurs branches radiales, lesquelles, le plus souvent, s'étendent sensiblement suivant le diamètre du cercle.

On sait que le calage en rotation du volant, avec une partie terminale libre de la colonne de direction, est effectué au moyen de cannelures ménagées sur un tronçon terminal de la colonne de direction, sur lesquelles s'emboîtent des cannelures correspondantes ménagées dans un alésage du moyeu, lequel, par ailleurs, comporte une surface tronconique apte à coopérer avec une surface tronconique prévue sur la colonne de direction. La fixation axiale du volant avec la colonne de direction est obtenue par un écrou indesserrable vissé à l'extrémité de la colonne de direction, et par une rondelle interposée entre une face frontale du moyeu et l'écrou précité.

Un tel dispositif a été proposé en particulier dans le brevet FR-A-997 670 où le tronçon terminal cannelé de la colonne de direction était constitué par une bague intermédiaire cannelée sur son côté radialement extérieur, tandis que par son côté radialement intérieur cette bague se fixe sur la colonne de direction au moyen du clavetage jusque-là pratiqué pour la fixation du moyeu même du volant.

Actuellement ces cannelures sont couramment pratiquées directement sur la partie terminale de la colonne de direction.

Usuellement la pose du volant sur la colonne de direction est effectuée après les différents réglages du train avant du véhicule.

Or, le train avant étant réglé après mise en place de la barre de direction et de la colonne de direction qui lui est associée, il en résulte que les réglages se répercutent sur la colonne de direction, qui tourne plus ou moins autour de son axe. On conçoit dès lors que les cannelures que comporte la colonne de direction, ne sont pas, dans la majorité des cas, placées angulairement pour permettre la pose du volant de manière telle que les branches de celui-ci soient parfaitement horizontales.

Afin de limiter une inclinaison trop importante des branches en cause, on a bien proposé de multiplier le nombre de cannelures. Couramment, le nombre de cannelures prévues sur la colonne de direction est de 40 ; il en est de même bien entendu sur le moyeu en sorte qu'après ajustement du volant, les branches peuvent être parfaitement horizontales, ce qui est extrêmement rare, mais aussi inclinées jusqu'à un angle de quatre degrés et demi, dans le cas du réglage le plus défavorable en fonction des cannelures les plus approchantes.

Pour rétablir l'horizontalité du volant, il est possible d'agir sur le train avant, mais cette technique demande du temps : elle nécessite outre un personnel spécialisé et un outillage apte à effectuer les réglages, un appareillage de contrôle, en sorte que, d'une manière générale, l'utilisateur renonce à faire effectuer de telles opérations.

Or, l'inclinaison des bras du volant, quelle qu'elle soit en valeur, constitue une gêne pour le conducteur, qui n'est pas à l'aise pour saisir le volant par ses branches sur parcours autoroutier notamment, indépendamment d'un effet esthétique laissant à désirer.

La présente invention vise à remédier aux inconvénients énoncés ci-dessus à l'aide d'un dispositif de réalisation simple, et de mise en place commode apte à régler angulairement, de manière progressive, la position angulaire d'un élément calé en rotation avec un autre élément tel que par exemple un volant de véhicule automobile calé sur une colonne de direction, un cylindre calé en rotation avec un arbre d'entraînement etc...

Elle propose à cet effet le dispositif défini dans la revendication 1.

Grâce au dispositif selon l'invention, la présentation du volant, en vue de sa fixation à la colonne de direction, peut être effectuée de manière approximative en présentant les branches à peu près horizontales, ces dernières pouvant ensuite être aisément ajustées horizontalement par simple action sur la vis de commande, avant blocage du volant avec la colonne de direction.

D'autres caractéristiques et avantages de la présente invention ressortiront d'ailleurs de la description qui va suivre donnée à titre d'exemple en référence aux dessins annexés dans lesquels :

la figure 1 montre en coupe longitudinale une forme de réalisation préférée d'un dispositif conformément à l'invention, pour régler la position angulaire d'un volant de véhicule automobile assemblé à une colonne de direction ;

la figure 2 est une vue en coupe transversale suivant la ligne II-II de la figure 1 ;

la figure 3 est une vue partielle analogue à la précédente, suivant la ligne III-III de la figure 1 ;

la figure 4 montre en coupe longitudinale la partie terminale d'une colonne de direction équipée d'un dispositif conformément à l'invention, pour régler la position angulaire d'un volant de véhicule automobile calé sur une colonne de direction ;

la figure 5 est une vue en coupe selon la ligne V-V de la figure 4, le moyeu du volant étant montré avant réglage angulaire ;

la figure 6 est une vue en coupe suivant la ligne VI-VI de la figure 4 ;

les figures 7 et 8 sont des vues analogues aux figures 4 et 5 montrant le moyeu du volant après réglage ;

la figure 9 est une vue analogue à la figure 4 d'une autre forme de réalisation du dispositif selon la présente invention et,

la figure 10 montre une autre forme de réalisation du dispositif conformément à l'invention dérivé du précédent ;

les figures 11 et 12 montrent deux autres exemples de réalisation.

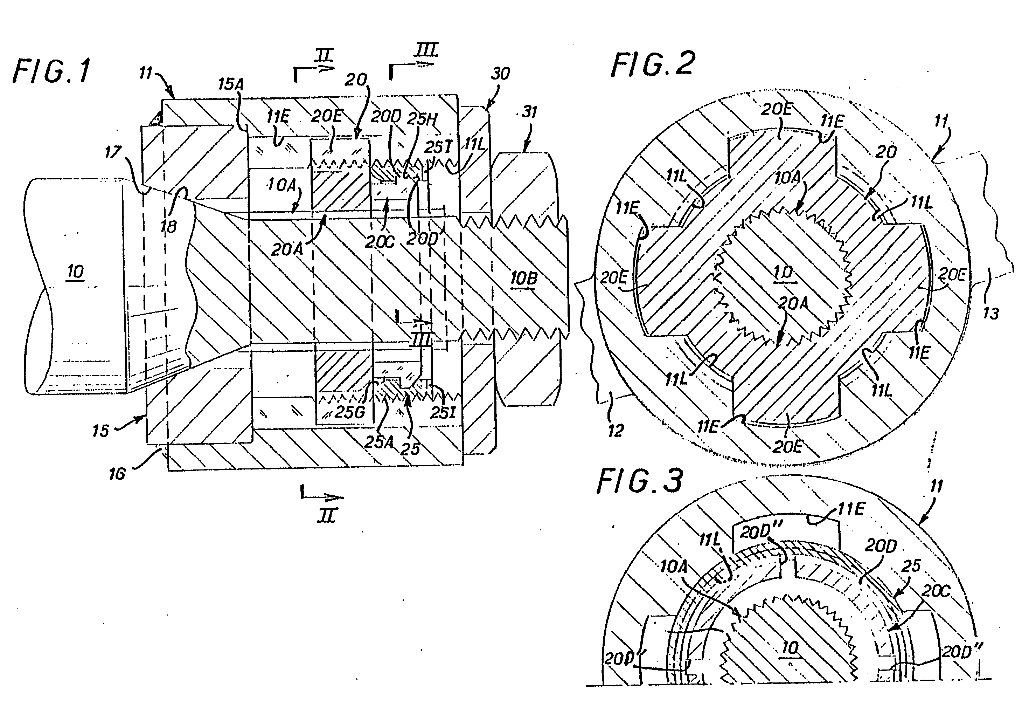

Suivant une forme de réalisation préférentielle de l'invention, illustrée par les figures 1 à 3, la partie terminale libre de la colonne de direction est indiquée par 10, le moyeu du volant par 11, ayant, par exemple, deux branches diamétrales 12, 13, partiellement représentées à la figure 2, qui sont raccordées au cercle du volant non représenté ici.

La partie terminale libre de la colonne de direction 10 comprend, de manière usuelle, une surface tronconique 18, prolongée par une surface dotée de cannelures rectilignes 10A, (40 par exemple régulièrement réparties à la périphérie) elle-même prolongée par un tronçon fileté 10B.

Le moyeu 11 du volant est équipé à une partie terminale d'une couronne 15 en butée sur un épaulement 15A, et qui est solidarisée au moyeu par soudure 16. La couronne en cause 15 présente une surface intérieure tronconique 17 apte à coopérer avec la surface tronconique 18 ménagée sur la colonne de direction 10.

Le moyeu 11 comporte sur sa surface intérieure au moins une, mais de préférence, une série de cannelures 11E en creux hélicoïdales adaptées à recevoir une série de nervures en relief 20E prévues sur la surface extérieure d'une bague 20, dont la surface intérieure présente des cannelures 20A aptes à s'emboîter sur les cannelures 10A en correspondance que comporte la colonne de direction 10.

La bague 20, qui est donc interposée entre la colonne de direction 10 et le moyeu 11 comprend sur une face un talon annulaire 20C, ayant un épaulement périphérique 20D, une rampe terminale 20D', et une pluralité de fentes radiales 20D" destinées à conférer au talon une possibilité de déformation élastique propre à permettre l'assemblage par encliquetage de la vis de commande 25 avec la bague 20.

Une telle vis de commande 25 est annulaire et coaxiale aux dits éléments, colonne de direction-moyeu ; elle comporte sur sa surface extérieure un filetage 25A en correspondance avec un taraudage 11L ménagé sur la face intérieure du moyeu 11 qui est comprise entre les cannelures hélicoïdales précitées, de sorte que les cannelures du moyeu sont à double fonction à savoir : variation de la position angulaire de la bague conjointement au déplacement axial de la vis. Sur sa surface intérieure la vis annulaire 25 présente une entrée avec plan incliné 25G, et une gorge 25H propre à coopérer avec l'épaulement 20D que comporte le talon 20C de la bague 20.

On comprend que la vis de commande 25 peut aisément être assemblée à la bague 20 par encliquetage et être fermement maintenue à celle-ci en particulier du fait de l'impossibilité d'extension radiale de la vis 25 après insertion dans le moyeu.

Pour sa manœuvre en rotation la vis de commande 25 présente sur sa face terminale une pluralité d'empreintes 25I, par exemple trois, décalées angulairement pour la réception d'un outil adapté.

On comprend aisément que la rotation de la vis de commande 25, avant blocage final du moyeu sur la colonne de direction 10, provoque le déplacement en translation de la bague 20, et par conséquent, l'entraînement en rotation du moyeu 11 du volant dont les branches peuvent être placées parfaitement horizontales postérieurement aux réglages des différents organes de la direction du véhicule.

On note par ailleurs que, entre les cannelures en relief 20E, le diamètre de la bague 20 est inférieur au diamètre du taraudage 11L de façon à ne pas détériorer celui-ci.

Après réglage, le blocage du volant sur la colonne de direction est assuré par la mise en place d'une plaque 30 sur laquelle prend appui un écrou indesserrable 31.

En variante il pourrait être prévu un ressort interposé entre la bague 20 et la couronne 15, cependant que la vis de commande 25 coopérerait avec la bague 20 par simple contact.

On observera que dans une telle forme de réalisation la vis de commande 25 étant annulaire, la poussée qu'exerce celle-ci sur la bague 20 est égale en tous points évitant ainsi les risques de coincement.

D'autre part les cannelures prévues sur la colonne de direction étant rectilignes permettent de présenter au mieux le volant avant réglage, tandis que le volant et l'assemblage bague-vis forment un tout qui peut être facilement assemblé.

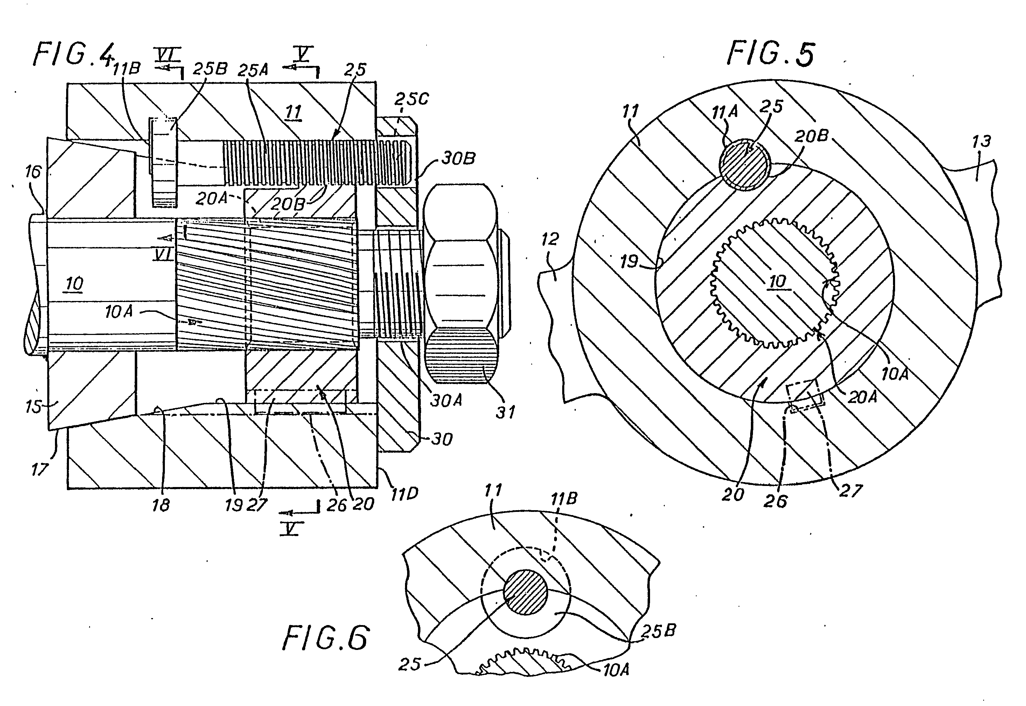

Suivant un autre exemple de réalisation de l'invention choisi et représenté aux figures 4 à 8, la partie terminale libre de la colonne de direction est indiquée par 10, le moyeu du volant par 11, d'où partent par exemple deux branches diamétrales 12, 13, partiellement représentées à la figure 5, qui sont raccordées au cercle du volant non représenté sur les dessins.

A la colonne de direction 10 est solidarisée, par exemple par soudure 16, une couronne 15 qui présente une surface extérieure 17 tronconique, destinée à coopérer avec une surface tronconique complémentaire 18 ménagée dans un alésage 19, que comporte le moyeu 11.

La colonne de direction 10 est calée en rotation avec le moyeu 11 avec possibilité de réglage angulaire progressif du moyeu et, partant du volant, antérieurement au blocage de ce dernier.

Suivant cet exemple la bague indiquée dans son ensemble par 20, présente sur sa surface interne des moyens d'attelage avec la colonne de direction 10 qui, tels qu'illustrés sont constitués par des cannelures hélicoïdales 20A ménagées sur la surface interne de la bague, et par des cannelures complémentaires 10A ménagées sur un tronçon terminal de la colonne de direction. Les cannelures hélicoïdales précitées présentent un pas qui, compte tenu de la translation de la bague 20 permettent au moins un déplacement progressif angulaire minimum correspondant au pas de deux cannelures consécutives.

Par sa surface externe, la bague 20 est attelée au moyeu 11 ; tel que représenté aux figures 4 à 8, l'attelage est réalisé par une vis 25 formant simultanément clavette et moyen de commande en translation de la bague 20, cette vis étant insérée dans un espace ménagé entre la surface externe de la bague et la surface interne du moyeu. A cet effet, la surface externe de la bague 20 est préparée pour former un premier logement longitudinal semi-cylindrique 20B comportant un taraudage, tandis que la face interne 19 du moyeu 11, est préparée pour former un second logement longitudinal semi-cylindrique 11A ; les deux logements semi-cylindriques étant mis face à face reçoivent, sans jeu transversal, une vis 25, présentant une tige filetée 25A, dont le pas est en correspondance avec celui du taraudage ménagé dans le semi-logement cylindrique 20B, et une tête 25B qui assure son immobilisation axiale par engagement dans une saignée 11B ménagée dans le moyeu 11.

Pour sa manœuvre en rotation, l'extrémité de la vis 25, qui est opposée à sa tête, comporte un trou borgne 25C, dont la section peut être polygonale, par exemple hexagonale, carrée, triangulaire ou encore oblongue, etc... dans le but de ne pouvoir être manœuvrée que par un opérateur possédant l'outil adapté.

Une plaque de serrage 30, comportant un passage central 30A, et un passage excentré 30B, pour la réception de l'extrémité libre de la vis 25, est engagée sur la colonne de direction 10 en prenant appui sur une face frontale 11D du moyeu, tandis qu'un écrou, du type indesserrable 31, assure le blocage du moyeu 11 par effet de coincement des surfaces tronconiques respectivement 17, 18.

Le tronçon fileté 25A de la vis 25 est avantageusement prévu avec un filet trapézoïdal, de même bien entendu que le taraudage ménagé dans le logement semi-cylindrique 20B, un tel taraudage ne s'étendant pas nécessairement sur toute la longueur dudit logement, mais sur une partie de celui-ci.

Au montage, avant serrage de l'écrou 31, lorsque l'opérateur constate que les branches 12, 13, du volant ne sont pas parfaitement horizontales, il est aisé à ce dernier d'amener celles-ci progressivement en position correcte, en agissant sur la vis 25, ce qui a pour effet de déplacer en translation la bague 20 sur la colonne de direction 10 ; or ce déplacement en translation de la bague 20 engendre — étant donné l'attelage à cannelures hélicoïdales — un entraînement en rotation du moyeu 11 et, partant, du volant.

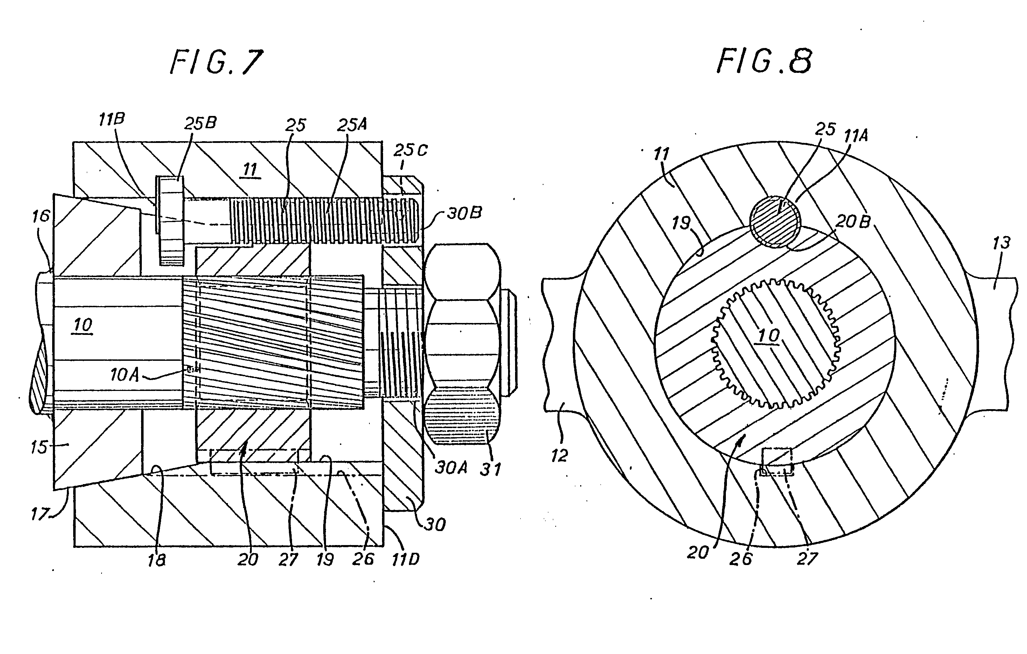

Il est donc possible à l'opérateur d'amener les branches 12, 13, du volant en bonne position tel qu'illustré aux figures 7 et 8 par déplacement angulaire progressif du moyeu du volant par rapport à la colonne de direction.

L'attelage de la bague 20 avec le moyeu 11, peut avantageusement être complété par une seconde clavette de préférence disposée suivant une direction diamétrale à la vis 25 formant élément de commande et clavette ; tel que représenté en traits discontinus aux figures 4 à 8, la surface interne du moyeu comporte une rainure rectiligne 26, tandis que la surface externe de la bague comporte une clavette 27 adaptée à coulisser dans la rainure précitée.

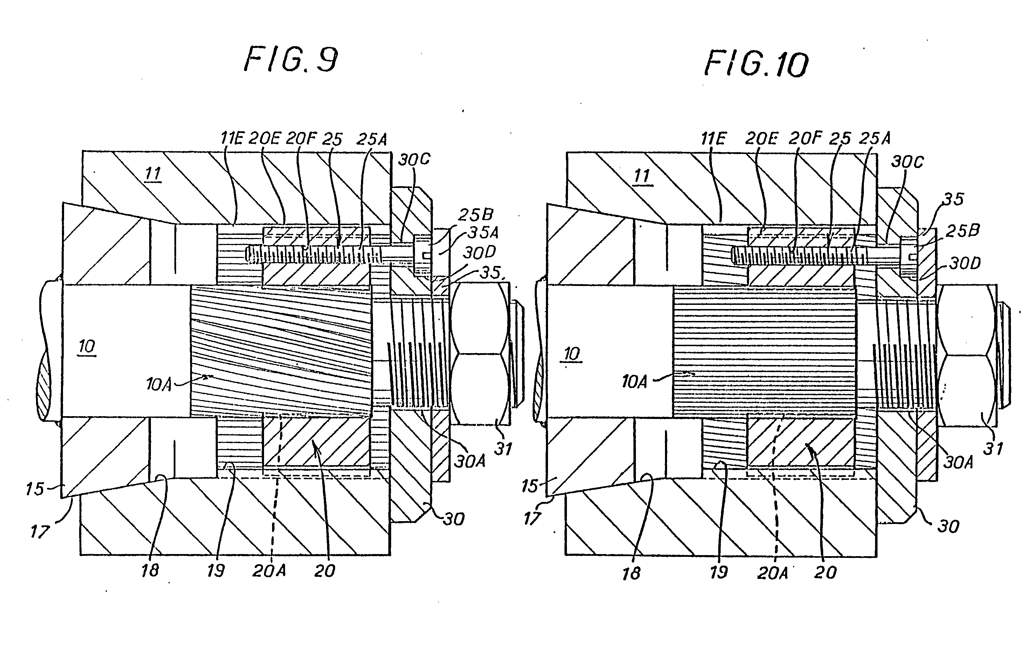

Suivant un autre exemple de réalisation illustré à la figure 9, pour laquelle il a été repris, les mêmes références pour désigner des éléments précédemment décrits, on remarque que l'attelage de la bague 20 avec la colonne de direction 10 est similaire à celui décrit et représenté en regard des figures 4 à 8 (cannelures hélicoïdales 10A, 20A) ; par contre, selon cet exemple de réalisation, la surface externe de la bague 20, comporte au moins une nervure apte à coopérer avec une cannelure complémentaire ménagée sur la surface interne 19 du moyeu 11. Tel qu'illustré, la surface externe de la bague 20, comporte des cannelures rectilignes 20E aptes à coopérer avec des cannelures 11E en correspondance ménagées sur la surface interne 19 du moyeu 11.

Pour le déplacement en translation de la bague 20 sur la colonne de direction, le corps de la bague 20 comporte un taraudage longitudinal 20F, dans lequel est engagée une vis 25 traversant, grâce à un passage 30C la plaque de serrage 30 ; la tête 25B de la vis 25 est avantageusement insérée et en appui dans un logement 30D ménagé à cet effet dans la plaque, et la vis est de préférence bloquée longitudinalement par un système de frein tel qu'une rondelle 35, comportant sur sa périphérie une échancrure 35A adaptée à permettre l'accès à la tête 25B de la vis 25.

De même que dans la forme de réalisation précédente, le réglage progressif de la position angulaire du moyeu 11, et par conséquent du volant, par rapport à la colonne de direction 10, est obtenu par la rotation de la vis 25, provoquant une translation de la bague 20 sur la colonne de direction, et, simultanément, un déplacement angulaire de ladite bague, celle-ci entraînant par là même le moyeu 11, le réglage étant, bien entendu effectué avant blocage du moyeu sur la colonne par l'écrou indesserrable 31.

Dans un autre exemple de réalisation illustré par la figure 10, on retrouve les mêmes éléments que dans l'exemple de réalisation décrit et illustré à la figure 9, mis à part, que l'attelage de la bague 20 avec la colonne de direction 10 est réalisé à l'aide de cannelures 10A, 20A, rectilignes, tandis que l'attelage de la bague 20 avec le moyeu 11, est réalisé à l'aide de cannelures 11E, 20E, hélicoïdales ménagées respectivement sur la surface interne 19 du moyeu 11, et sur la surface externe de la bague 20.

De même que dans les exemples de réalisation précédents, le réglage progressif de la position angulaire du moyeu 20 est obtenu en agissant sur la vis 25, avant le blocage du moyeu 11, les surfaces tronconiques 17, 18, étant simplement en contact, de sorte que le réglage est effectué pratiquement sans déplacement axial du moyeu par rapport à la colonne de direction.

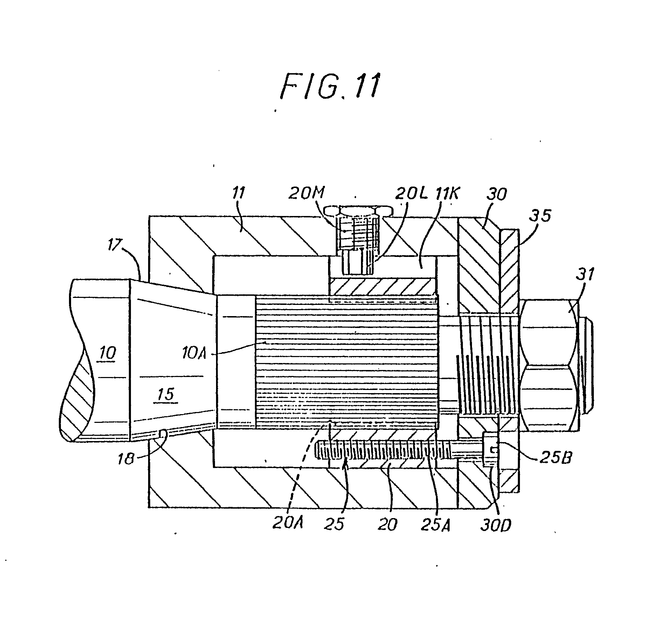

Suivant encore un autre exemple de réalisation montré à la figure 11, l'attelage de la bague 20 avec la colonne de direction 10, est réalisé à l'aide des cannelures rectilignes 10A ménagées sur la surface externe de la colonne de direction, engrenant avec des cannelures correspondantes 20A ménagées sur la surface interne de la bague, tandis que l'attelage de la bague 20 avec le moyeu comprend une cannelure hélicoïdale 11K ménagée dans la surface externe de la bague ; cette cannelure étant adaptée à coulisser sur au moins un téton 20L saillant sur la surface interne du moyeu. Tel qu'illustré le téton constitue l'extrémité d'une vis 20M radiale portée par le moyeu, de préférence diamétralement opposée à la vis de réglage 25G.

Dans cet exemple de réalisation, le moyeu 11 comprend un alésage à surface tronconique 18 apte à coopérer avec une surface tronconique 17 prévue sur la colonne de direction.

Dans ce qui précède, il a été pris pour exemple un volant du type comportant un cercle relié au moyeu par deux branches diamétrales qui sont les plus courantes ; mais on conçoit qu'un dispositif selon l'invention peut tout aussi bien être utilisé pour le réglage en position angulaire de tous autres types de volants.

Comme précédemment, suite à un desserrage de l'écrou 31 il est possible de faire tourner le moyeu 11 autour de la colonne de direction 10, en translatant la bague 20 au moyen de la vis de commande 25.

On observera qu'un dispositif selon l'invention permet d'effectuer un réglage parfait de la position angulaire du volant sur la colonne de direction, soit au moment du montage de celui-ci, soit ultérieurement et ce, sans incidence sur les réglages antérieurs du train avant du véhicule.

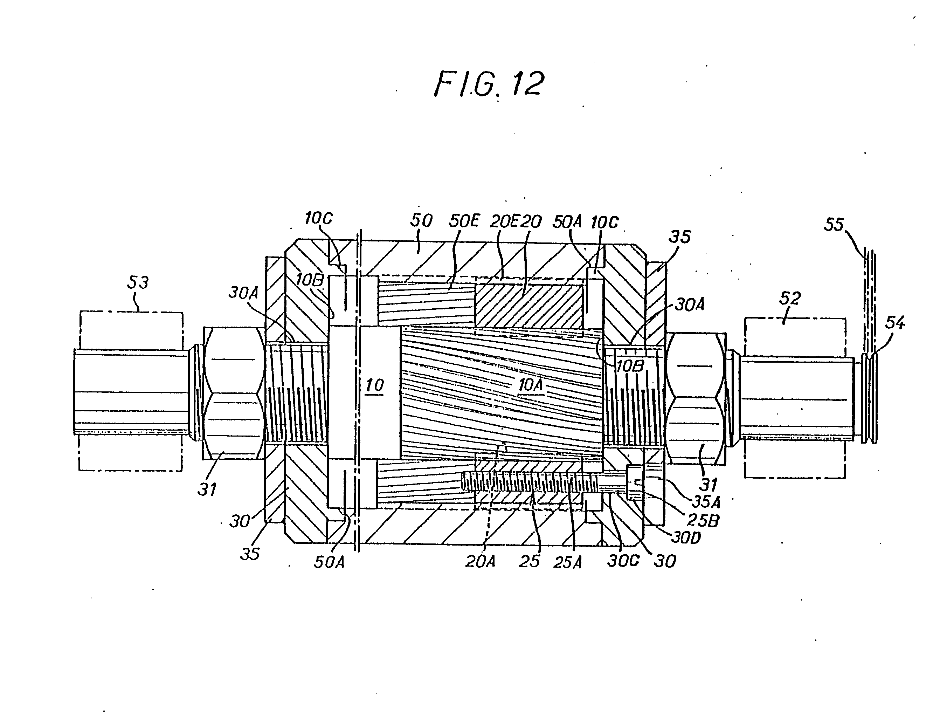

Un dispositif selon l'invention est susceptible d'autres applications. Il peut notamment être mis en œuvre pour permettre le réglage en position angulaire d'un cylindre calé en rotation avec un arbre d'entraînement tel que représenté à la figure 12. Selon cet exemple de réalisation le cylindre 50 est calé en rotation avec un arbre d'entraînement 10 dont les parties terminales sont montées tournantes dans des paliers 52, 53, l'arbre 10 portant au-delà de l'un des paliers, en l'espèce le palier 52, un pignon 54 sur lequel engrène une transmission 55.

Vers une partie terminale, l'arbre d'entraînement 10 comporte un tronçon dont la surface externe présente des cannelures hélicoïdales 10A engrenant avec des cannelures complémentaires 20A ménagées sur la face interne de la bague 20, tandis que la surface externe de ladite bague, comporte des cannelures hélicoïdales 20E, engrenant avec des cannelures complémentaires 50E, ménagées sur un tronçon de la face interne du cylindre. Suivant cet exemple les deux attelages ainsi constitués comprennent des surfaces cannelées dont les cannelures sont de direction opposée.

Le cylindre 50 est immobilisé axialement et transversalement par rapport à l'arbre d'entraînement 10 par tous moyens appropriés. Dans l'exemple représenté, deux plaques de serrage 30, engagées sur l'arbre d'entraînement grâce à des passages 30A, prennent appui sur des épaulements 10B ménagés sur l'arbre d'entraînement 10, tandis qu'une nervure circulaire 10C, ménagée sur la face intérieure des plaques de serrage est adaptée à s'emboîter dans une gorge terminale correspondante 50A ménagée dans le cylindre.

On réalise ainsi l'immobilisation axiale et transversale du cylindre 50 par rapport à l'arbre d'entraînement 10. De la même manière que dans les exemples de réalisation décrits en regard des figures 9 à 11 l'une des plaques de serrage 30 comporte un passage 30C et un logement 30D pour la mise en place et l'association de la vis 25 avec la bague 20, pour assurer le déplacement en translation de celle-ci.

La vis 25 est immobilisée axialement par la rondelle 35, laquelle, comporte un trou 35A permettant l'accès à la vis lorsque, bien entendu, le trou en cause est amené en regard de la tête 25B de celle-ci.

Des écrous 31 vissés sur l'arbre d'entraînement assurent l'assemblage des divers éléments. Le réglage de la position angulaire du cylindre 50 par rapport à l'arbre d'entraînement 10 est obtenu après desserrage de l'un au moins des écrous 31, et en agissant sur la vis de commande 25. Les attelages respectifs de la bague 20 avec l'arbre d'entraînement 10, et de la bague 20 avec le cylindre, étant formés par des cannelures hélicoïdales inclinées, et de direction opposée, permettent d'une part, l'absorption d'un couple élevé sans que la bague 20 ait tendance à un déplacement axial, et, d'autre part, l'obtention d'un déplacement angulaire du cylindre 50 qui est le double de celui d'attelages ne comportant qu'une seule série de cannelures hélicoïdales.

**Revendications**

1. Dispositif pour régler la position angulaire d'un élément menant (11, 50) accouplé à un élément mené (10) qui sont susceptibles d'être entraînés en rotation, comprenant une bague (20) interposée entre lesdits éléments, et dont les surfaces, respectivement intérieure et extérieure, comprennent des moyens de cannelures aptes à coopérer avec des moyens complémentaires que comportent lesdits éléments, pour former ainsi deux attelages, l'un au moins de ceux-ci ayant des cannelures hélicoïdales, et ladite bague (20) étant associée à un moyen de commande en translation, de sorte qu'un déplacement en translation de celle-ci entraîne l'un des éléments en déplacement angulaire, caractérisé en ce que le moyen de commande comprend une vis (25) d'axe parallèle aux axes de rotation des éléments (10, 11), et qui, par coopération avec la bague (20) d'une part, et l'élément menant (11) d'autre part, est apte à assurer, par une rotation commandée, la translation de la bague, l'élément portant la bague étant avantageusement une colonne de direction d'un véhicule automobile, tandis que l'autre élément forme le moyeu du volant de direction assemblé à ladite colonne, lesdits éléments comportant chacun une portée à surface tronconique (17, 18) propres à coopérer.

2. Dispositif suivant la revendication 1, caractérisé en ce que la vis de commande (25) est annulaire et coaxiale aux deux éléments (10, 11), elle est en prise, par sa surface intérieure, avec un talon (20C) que comporte la bague (20), et par sa surface extérieure filetée, avec le moyeu (11) taraudé à cet effet, l'attelage colonne de direction-bague comprenant des cannelures rectilignes (10A, 20A), tandis que l'attelage bague-moyeu comprend au moins une, mais de préférence une série de cannelures (11E, 20E) hélicoïdales, les cannelures du moyeu étant à double fonction à savoir, variation de la position angulaire de la bague conjointement au déplacement axial de la vis.

3. Dispositif suivant la revendication 2, caractérisé en ce que le talon (20C) que comporte la bague est annulaire et il comporte une série de fentes radiales ainsi qu'un épaulement (20D) périphérique, adaptés à permettre l'assemblage par encliquetage de la vis annulaire (25) avec la bague, ladite vis (25) comportant une surface intérieure avec une gorge emboîtable sur l'épaulement précité.

4. Dispositif suivant l'une quelconque des revendications précédentes, caractérisé en ce que la vis de commande (25) comprend, pour sa manœuvre en rotation, sur une face terminale, une série d'empreintes (25I) réparties circonférentiellement au choix, propres à coopérer avec un outil aménagé à cet effet.

5. Dispositif suivant l'une quelconque des revendications précédentes, caractérisé en ce que au moyeu (11) est solidarisée une couronne (15) dont l'alésage forme une portée, à surface tronconique (17) propre à coopérer avec une portée complémentaire (18) aménagée sur la colonne de direction (50).

6. Dispositif suivant la revendication 1, caractérisé en ce que la vis de commande (25) est déportée radialement par rapport aux axes de rotation desdits éléments (10, 11).

7. Dispositif suivant la revendication 6, caractérisé en ce que la vis de commande (25) est insérée dans un espace cylindrique formé par deux demi-logements longitudinaux (20B, 11A) ménagés respectivement sur la surface externe de la bague (20), et la surface interne (19) du moyeu (11), ladite vis formant simultanément clavette, étant immobilisée axialement par engagement de sa tête (25B) dans une gorge (11B) ménagée dans le moyeu (11), tandis que son tronçon fileté (25A) est en prise avec une zone taraudée du demi-logement (20B) ménagé dans la bague (20).

8. Dispositif suivant la revendication 7, caractérisé en ce que l'attelage de la bague (20) avec le moyeu (11) comprend, outre la vis de commande (25) précitée formant clavette, au moins une seconde clavette (27) qui est disposée diamétralement à la première, en étant déplaçable dans une rainure rectiligne (26), l'attelage entre la surface intérieure de la bague (20) et la colonne de direction (10) comprenant au moins une cannelure et une rainure hélicoïdale, mais de préférence deux surfaces cannelées complémentaires (10A, 20A).

9. Dispositif suivant la revendication 8, caractérisé en ce que l'attelage du moyeu (11) avec la bague est constitué par des cannelures (11E, 24E) rectilignes ménagées respectivement sur la surface intérieure du moyeu et sur la surface extérieure de la bague.

10. Dispositif suivant la revendication 7, caractérisé en ce que l'une des portées à surface tronconique (17) est formée par une couronne (15) qui est solidarisée à la colonne de direction (10), et qui est adaptée à coopérer avec une surface tronconique (18) complémentaire ménagée sur la face interne du moyeu (11).

11. Dispositif suivant l'une quelconque des revendications précédentes 8 à 10, caractérisé en ce que l'extrémité de la vis de commande (25) opposée à sa tête (25B) est engagée dans un passage (30B) d'une plaque de serrage (30) elle-même pourvue d'un trou central (30A) pour engagement sur la partie terminale de la colonne de direction (10).

12. Dispositif suivant la revendication 11, caractérisé en ce que l'extrémité libre de la vis (25) est ménagée avec un trou borgne (25C) à section polygonale propre à la réception d'un outil de manœuvre en rotation.

13. Dispositif suivant l'une quelconque des revendications précédentes, caractérisé en ce que la vis de commande (25) est engagée par son tronçon fileté (25A) dans un passage taraudé (20F) ménagé dans la bague (20) parallèlement à son axe, tandis que la tête (25B) de ladite vis (25) est en appui dans un logement (30D) ménagé dans la plaque de serrage (30).

14. Dispositif suivant l'une quelconque des revendications précédentes 7 à 13, caractérisé en ce que l'attelage colonne de direction (10) — bague (20), est réalisé au moyen de cannelures rectilignes (10A, 20A) tandis que l'attelage bague-moyeu est réalisé au moyen de cannelures hélicoïdales (11E, 20E).

15. Dispositif suivant l'une quelconque des revendications précédentes, caractérisé en ce que la bague (20) est attelée à un tronçon terminal (10A) de la colonne de direction (10), au moyen de cannelures droites complémentaires (11A, 20A), tandis que l'attelage de la bague (20) avec le moyeu (11), comprend une rainure hélicoïdale (11K) ménagée sur la surface extérieure de la bague (20), ladite rainure étant adaptée à coulisser sur au moins un téton radial (20L) saillant sur la surface interne du moyeu (11).

16. Dispositif suivant la revendication 15, caractérisé en ce que le téton (20L) est formé à l'extrémité d'une vis (20M) engagée radialement dans le moyeu aménagé à cet effet.

17. Dispositif suivant la revendication 1, caractérisé en ce que la vis de commande (25) agit sur une bague dont la surface intérieure engrène par cannelures (20A) avec un arbre (10) rotatif sur des paliers (52, 53) lequel arbre est adapté à porter un cylindre (50) comportant vers une partie terminale une surface intérieure avec cannelures (50E) propres à engrener avec les cannelures (20E) prévues sur la surface extérieure de la bague, l'un au moins des attelages ainsi réalisés comprenant des cannelures hélicoïdales.

## Claims

1. A device for adjusting the angular position of a driving member (11, 50) coupled to a driven member (10), which members are capable of being driven in rotation, comprising a ring (20) interposed between said members and the inside and outside surfaces of which respectively comprise spline means co-operable with complementary means provided on said members, thereby to form two coupling means, one at least thereof having helical splines, and said ring (20) being associated with a translatory actuating means, whereby translatory displacement of the ring results in angular displacement of one of the members, characterised in that the actuating means comprises a screw (25) whose axis is parallel to the axes of rotation of the members (10, 11) and which, by co-operating with the ring (20) on the one hand and the driving member (11) on the other hand, is capable of providing for translatory movement of the ring by virtue of a controlled rotary movement, the member carrying the ring advantageously being a motor vehicle steering column while the other member forms the hub of the steering wheel which is fitted to said column, said members each comprising a bearing portion with a frustoconical surface (17, 18) capable of co-operating with each other.

2. A device according to claim 1 characterised in that the actuating screw (25) is annular and coaxial with the two members (10, 11), it is engaged by way of its inside surface with a projection (20C) carried by the ring (20) and by way of its threaded outside surface with the hub (11) which is screwthreaded for that purpose, the steering column-ring coupling means comprising straight splines (10A, 20A) while the ring-hub coupling means comprises at least one but preferably a series of helical splines (11E, 20E), the splines of the hub performing a double function, namely a variation in the angular position of the ring conjointly with the axial displacement of the screw.

3. A device according to claim 2 characterised in that the projection (20C) on the ring is annular and it comprises a series of radial slots and a peripheral shoulder (20D), which are adapted to permit assembly of the annular screw (25) to the ring by a snap-engagement action, said screw (25) comprising an inside surface with a groove which can be engaged over said shoulder.

4. A device according to any one of the preceding claims characterised in that for rotational movement of the actuating screw (25), the actuating screw is provided on an end face with a series of recesses (25I) which are distributed circumferentially as desired and which are capable of co-operating with a tool designed for that purpose.

5. A device according to any one of the preceding claims characterised in that a ring member (15) is fixed to the hub (11), the bore in the ring member (15) forming a bearing portion with frustoconical surface (17) co-operable with a complementary bearing portion (18) provided on the steering column (50).

6. A device according to claim 1 characterised in that the actuating screw (25) is offset radially with respect to the axes of rotation of said members (10, 11).

7. A device according to claim 6 characterised in that the actuating screw (25) is fitted into a cylindrical space formed by two longitudinal half-housings (20B, 11A) provided respectively on the outside surface of the ring (20) and the inside surface (19) of the hub (11), said screw at the same time forming a key, being immobilised axially by engagement of its head (25B) in a groove (11B) provided in the hub (11) while its screwthreaded portion (25A) is engaged with a screwthreaded zone of the half-housing (20B) provided in the ring (20).

8. A device according to claim 7 characterised in that the means coupling the ring (20) to the hub (11), besides the actuating screw (25) forming a key, comprises at least one second key (27) which is disposed diametrally relative to the first, being displaceable in a straight groove (26), the coupling means between the inside surface of the ring (20) and the steering column (10) comprising at least one helical groove and spline but preferably two complementary splined surfaces (10A, 20A).

9. A device according to claim 8 characterised in that the means for coupling the hub (11) to the ring is formed by straight splines (11E, 24E) which are provided respectively on the inside surface of the hub and on the outside surface of the ring.

10. A device according to claim 7 characterised in that one of the bearing portions with frustoconical surface (17) is formed by a ring member (15) which is fixed with respect to the steering column (10) and which is adapted to cooperate with a complementary frustoconical surface (18) provided on the inside face of the hub (11).

11. A device according to any one of preceding claims 8 to 10 characterised in that the end of the actuating screw (25) which is opposite to its head (25B) is engaged into a passage (30B) in a clamping plate (30) which is itself provided with a central hole (30A) for engagement over the terminal portion of the steering column (10).

12. A device according to claim 11 characterised in that the free end of the screw (25) is provided with a blind hole (25C) of polygonal section for receiving a tool for rotating it.

13. A device according to any one of the preceding claims characterised in that the actuating screw (25) is engaged by its screwthreaded portion (25A) into a screwthreaded passage (20F) provided in the ring (20) parallel to the axis thereof while the head (25B) of said screw (25) bears against a housing (30D) provided in the clamping plate (30).

14. A device according to any one of preceding claims 7 to 13 characterised in that the coupling means between the steering column (10) and the ring (20) is provided by means of straight splines (10A, 20A) while the ring-hub coupling means is provided by means of helical splines (11E, 20E).

15. A device according to any one of the preceding claims characterised in that the ring (20) is coupled to a terminal portion (10A) of the steering column (10) by means of complementary straight splines (11A, 20A) while the means for coupling the ring (20) to the hub (11) comprises a helical groove (11K) provided on the outside surface of the ring (20), said groove being adapted to slide on at least one radial stud (20L) projecting beyond the inside surface of the hub (11).

16. A device according to claim 15 characterised in that the stud (20L) is formed at the end of a screw (20M) which is radially engaged into the hub which is arranged for that purpose.

17. A device according to claim 1 characterised in that the actuating screw (25) acts on a ring of which the inside surface meshes by splines (20A) with a shaft (10) which is rotatable in bearings (52, 53), which shaft is adapted to carry a cylinder (50) which towards a terminal portion has an inside surface with splines (50E) capable of engaging with the splines (20E) provided on the outside surface of the ring, one at least of the resulting coupling means comprising helical splines.

**Patentansprüche**

1. Vorrichtung zum Regeln der Winkelposition eines treibenden Elementes (11, 50), das an einem getriebenen Element (10) angekuppelt ist, welche in Drehung versetzt werden können, mit einem Ring (20), der zwischen den Elementen angeordnet ist, und dessen innere bzw. äußere Oberfläche Furchenmittel enthält, die geeignet sind, mit komplementären Mitteln zusammenzuwirken, die die Elemente aufweisen, um so zwei Kupplungen zu bilden, wobei wenigstens eine von diesen schraubenförmige Furchen aufweist, und wobei der Ring (20) einem Translationssteuermittel zugeordnet ist, so daß eine Translationsverschiebung von ihm eines der Elemente in einer Winkelverschiebung mitnimmt, dadurch gekennzeichnet, daß das Steuermittel eine Schraube (25) mit einer zu den Drehachsen der Elemente (10, 11) parallelen Achse umfaßt, und das durch Zusammenwirken mit dem Ring (20) einerseits und dem treibenden Element (11) andererseits geeignet ist, durch eine gesteuerte Drehung die Translation des Ringes sicherzustellen, wobei das den Ring tragende Element vorteilhafterweise eine Lenksäule eines Kraftfahrzeugs ist, während das andere Element die Nabe des Lenkrads bildet, die mit der Säule verbunden ist, wobei jedes der Elemente eine zum Zusammenwirken geeignete Tragfläche mit einer kegelstumpfförmigen Oberfläche (17, 18) umfaßt.

2. Vorrichtung nach Anspruch 1, dadurch gekennzeichnet, daß die Steuerschraube (25) ringförmig und zu den zwei Elementen (10, 11) koaxial ist, daß sie mit ihrer inneren Oberfläche mit einem Absatz (20C) in Eingriff ist, den der Ring (20) aufweist, und mit seiner äußeren Gewindeoberfläche mit der Nabe (11), die hierzu mit einem Gewinde versehen ist, wobei die Kupplung Lenksäule-Ring geradlinige Furchen (10A, 20A) umfaßt, während die Kupplung Ring-Nabe wenigstens eine, aber vorzugsweise eine Reihe von schraubenförmigen Furchen (11E, 20E) umfaßt, wobei die Furchen der Nabe eine doppelte Funktion aufweisen, nämlich die Veränderung der Winkelstellung des Ringes verbunden mit der Axialverschiebung der Schraube.

3. Vorrichtung nach Anspruch 2, dadurch gekennzeichnet, daß der Absatz (20C), den der Ring aufweist, ringförmig ist, und daß er eine Reihe von radialen Schlitzen sowie einen Umfangsvorsprung (20D) umfaßt, die geeignet sind, die Montage durch Sperrung der ringförmigen Schraube (25) mit dem Ring zu ermöglichen, wobei die Schraube (25) eine innere Oberfläche mit einer auf dem vorher erwähnten Vorsprung einpaßbaren Auskehlung aufweist.

4. Vorrichtung nach einem der vorhergehenden Ansprüche, dadurch gekennzeichnet, daß die Steuerschraube (25) für ihre Drehbetätigung auf einer Endfläche eine Reihe von wahlweise über den Umfang verteilten Vertiefungen (25I) aufweist, die geeignet sind, mit einem zu diesem Zweck eingerichteten Werkzeug zusammenzuwirken.

5. Vorrichtung nach einem der vorhergehenden Ansprüche, dadurch gekennzeichnet, daß mit der Nabe (11) eine Krone (15) verbunden ist, deren Bohrung eine Haltefläche mit einer kegelstumpfförmigen Oberfläche (17) bildet, die geeignet ist, mit einer komplementären, auf der Lenksäule (50) eingerichteten Haltefläche (18) zusammenzuwirken.

6. Vorrichtung nach Anspruch 1, dadurch gekennzeichnet, daß die Steuerschraube (25) radial bezüglich der Drehachsen der Elemente (10, 11) verschoben ist.

7. Vorrichtung nach Anspruch 6, dadurch gekennzeichnet, daß die Steuerschraube (25) in einen zylindrischen Raum eingeführt ist, der durch zwei halbe Längsaufnahmen (20B, 11A) gebildet ist, die auf der äußeren Oberfläche des Ringes (20) bzw. auf der inneren Oberfläche (19) der Nabe (11) angebracht sind, wobei die Schraube gleichzeitig einen Keil bildet, der axial durch Eingriff seines Kopfes (25B) in einer Auskehlung (11B) festgestellt ist, die in der Nabe (11) vorgesehen ist, während ihr Gewindeschaft (25A) mit einem mit einem Gewinde versehenen Bereich der halben Aufnahme (20B) in Eingriff ist, die in dem Ring (20) angebracht ist.

8. Vorrichtung nach Anspruch 7, dadurch gekennzeichnet, daß die Kupplung des Rings (20) mit der Nabe (11) neben der erwähnten Steuerschraube (25), die einen Keil bildet, wenigstens einen zweiten Keil (27) umfaßt, der diametral zum ersten angeordnet und in einer geradlinigen Nut (26) verschiebbar ist, wobei die Kupplung zwischen der inneren Oberfläche des Ringes (20) und der Lenksäule (10) wenigstens eine Furche und eine schraubenförmige Nut aufweist, aber vorzugsweise zwei komplementäre gefurchte Oberflächen (10A, 20A).

9. Vorrichtung nach Anspruch 8, dadurch gekennzeichnet, daß die Kupplung der Nabe (11) mit dem Ring durch geradlinige Furche (11E, 24E) gebildet wird, die auf der inneren Oberfläche der Nabe bzw. auf der äußeren Oberfläche des Ringes angebracht sind.

10. Vorrichtung nach Anspruch 7, dadurch gekennzeichnet, daß eine der Tragflächen mit kegelstumpfförmiger Oberfläche (17) durch eine Krone (15) gebildet wird, die mit der Lenksäule (10) verbunden ist und die geeignet ist, mit einer komplementären kegelstumpfförmigen Oberfläche (18) zusammenzuwirken, die auf der inneren Fläche der Nabe (11) vorgesehen ist.

11. Vorrichtung nach einem der Ansprüche 8 bis 10, dadurch gekennzeichnet, daß das Ende der Steuerschraube (25), das ihrem Kopf (25B) entgegengesetzt ist, in einem Durchtritt (30B) einer Druckplatte (30) im Eingriff ist, die selbst mit einem zentralen Loch (30A) zum Eingriff auf dem Endbereich der Lenksäule (10) versehen ist.

12. Vorrichtung nach Anspruch 11, dadurch gekennzeichnet, daß das freie Ende der Schraube (25) mit einem Sackloch (25C) mit vieleckigem Querschnitt zur Aufnahme eines Werkzeugs zur Drehbetätigung versehen ist.

13. Vorrichtung nach einem der vorhergehenden Ansprüche, dadurch gekennzeichnet, daß die Steuerschraube (25) mit ihrem Gewindeschaft (25A) in einem mit einem Gewinde versehenen Durchtritt (20F) in Eingriff ist, der in dem Ring (20) parallel zu seiner Achse vorgesehen ist, während der Kopf (25B) der Schraube (25) in einer Aufnahme (30D) anliegt, die in der Druckplatte (30) angebracht ist.

14. Vorrichtung nach einem der Ansprüche 7 bis 13, dadurch gekennzeichnet, daß die Kupplung Lenksäule (10) — Ring (20) mittels geradliniger Furchen (10A, 20A) verwirklicht ist, während die Kupplung Ring-Nabe mittels schraubenförmiger Furchen (11I, 20I) verwirklicht ist.

15. Vorrichtung nach einem der vorhergehenden Ansprüche, dadurch gekennzeichnet, daß der Ring (20) an einem Endschaft (10A) der Lenksäule (10) mittels komplentärer gerader Furchen (11A, 20A) angekuppelt ist, während die Kupplung des Rings (20) mit der Nabe (11) eine schraubenförmige Furche (11K) umfaßt, die auf der äußeren Oberfläche des Rings (20) angebracht ist, wobei die Furche geeignet ist, mit wenigstens einem radialen Ansatz (20L) ineinander zu gleiten, der über die innere Oberfläche der Nabe (11) vorspringt.

16. Vorrichtung nach Anspruch 15, dadurch gekennzeichnet, daß der Ansatz (20L) am Ende einer Schraube (20M) ausgebildet ist, die radial in der zu diesem Zweck eingerichteten Nabe in Eingriff ist.

17. Vorrichtung nach Anspruch 1, dadurch gekennzeichnet, daß die Steuerschraube (25) auf einem Ring wirkt, dessen innere Oberfläche über Furchen (20A) mit einer auf Lagern (52, 53) drehbaren Achse (10) ineinander greift, wobei die Achse geeignet ist, einen Zylinder (50) zu tragen, der gegen einen Endbereich hin eine innere Oberfläche mit Furchen (50E) aufweist, die geeignet sind, mit den Furchen (20E) ineinander zu greifen, die auf der äußeren Oberfläche des Rings vorgesehen sind, wobei wenigstens eine der auf diese Weise verwirklichten Kupplungen schraubenförmige Furchen umfaßt.

FIG.1

FIG.2

FIG.3

EP 0 148 794 B1

FIG.4

FIG.5

FIG.6

EP 0 148 794 B1

FIG.8

FIG.7

FIG.9

FIG.10

EP 0 148 794 B1

FIG. 11

FIG. 12